# EUROPÄISCHE PATENTSCHRIFT

(11) **EP 0 532 970 B1**
(45) Veröffentlichungstag und Bekanntmachung des Hinweises auf die Patenterteilung: **27.12.1996**
(21) Anmeldenummer: 92114895.3
(22) Anmeldetag: 01.09.1992
(51) Int. Cl.: B64F 5/00, B66F 3/24

(54) **Heber, insbesondere Dreibockheber für Flugzeuge**
Jack, especially a three-legged jack for aircraft
Vérin de levage, en particulier support trépied pour avion

(30) Priorität: 20.09.1991 DE 4131326
(43) Veröffentlichungstag der Anmeldung: 24.03.1993
(73) Patentinhaber: Hydro-Gerätebau GmbH & Co. KG Hebezeuge, D-77781 Biberach (DE)
(72) Erfinder: Holzer, Josef, W-7613 Gengenbach (DE); Scharsig, Hans-Hermann, W-7600 Offenburg (DE); Klem, Herbert, W-7640 Kehl 15 (DE)
(74) Vertreter: Schmitt, Hans, Dipl.-Ing.

(56) Entgegenhaltungen:
- EP-A- 0 287 044
- CH-B- 571 457
- DE-A- 3 816 381
- DE-U- 9 111 732

## Beschreibung

Die Erfindung betrifft einen Heber, insbesondere einen Dreibockheber für Flugzeuge, mit einem Hubzylinder, der in einem Gestell starr gehalten ist, welches mindestens drei Standabstützungen hat, wobei der Heber zur Erfassung von Abweichungen des Hubzylinders aus der Vertikallage zumindest einen Neigungssensor und eine Neigungsanzeige aufweist und wobei wenigstens zwei der Abstützungen zum vertikalen Ausrichten des Hubzylinders getrennt voneinander längenveränderbar sind.
Man kennt bereits Dreibockheber, die zum Anheben von mittelgroßen Flugzeugen sowie Großflugzeugen zu Wartungs- und Reparaturzwecken eingesetzt werden. Dabei werden regelmäßig drei dieser Heber unterhalb des Flugzeuges positioniert und der Hubzylinder jedes Hebers in eine vertikale Lage zu dem vorgesehenen Hebepunkt an der Flugzeugunterseite gebracht. Jeder Heber weist dazu drei als Standabstützungen dienende Stützräder auf, deren Radaufhängungen mittels eines manuell betätigbaren Hydraulikzylinders getrennt voneinander längenveränderbar sind.
Mit Hilfe der Stützräder können die Hubzylinder unterhalb des Flugzeuges in den Bereich eines des vorgesehenen Hebepunkte verfahren werden; sodann werden Abweichungen des Hubzylinders eines Hebers aus seiner vertikalen Lage durch ein Verlängern oder Verkürzen einzelner der als Stützräder ausgebildeten Standabstützungen ausgeglichen.

Dabei werden die Hydraulikzylinder der Standabstützungen manuell in Abhängigkeit von der Anzeige einer Dosenlibelle betätigt, die als Neigungssensor dient und zum Ausrichten des Hubzylinders in dessen Nähe am Heber vorgesehen ist.

Nach dem lotrechten Ausrichten des Hubzylinders unterhalb des Flugzeuges fluchtet dieser häufig nicht mehr mit dem vorgesehenen Hebepunkt an der Flugzeugunterseite. Da das Positionieren und Ausrichten der Heber ohnehin schon viel Zeit und mehrere Leute in Anspruch nimmt, besteht häufig die Gefahr, daß das Bedienpersonal den Hubzylinder durch Absenken oder Anheben einzelner Standabstützungen zum entsprechenden Hebepunkt ausrichtet und dabei dessen Abweichung aus der Vertikallage in Kauf nimmt. Solche Abweichungen der an der Flugzeugunterseite angreifenden Hubzylinder können jedoch zu Beschädigungen am Flugzeug führen, beispielsweise wenn dieses durch die einwirkenden Kräfte aus seinen Verankerungspunkten mit den Hubzylindern rutscht.
Aus der EP-A-0 287 044 ist bereits eine Einrichtung mit drei an einem Flugzeug ansetzbaren Hebern, einem am Flugzeug anbringbaren Lagegeber und einer Steuereinheit bekannt, mit der sich das Flugzeug in einer vorgebbaren Sollage nivelliert aufbocken und auch absenken läßt. Die vorbeschriebene Problematik beim einzelnen Ausrichten der drei Heber in eine lotrechte Lage und Ansetzen der Heber an vorgegebenen Flugzeug-Hebepunkten bleibt bei dieser Einrichtung ungelöst.
Aus der CH-A-571 457 ist ein Dreibockheber gemäß dem Oberbegriff des Anspruchs 1 bzw. 6 bekannt, der als Steuerung zum Ausrichten in eine vertikale Lage Betätigungsvorrichtungen aufweist, die von Hand bedienbare Drehknebel und Schwenkhebel haben. Außerdem ist noch eine von Hand zu betätigende, hydraulische Pumpe vorgesehen. Zum Bedienen der Betätigungsvorrichtungen sind hierbei sechs verschiedene Betätigungsmöglichkeiten vorhanden. Diese Vielzahl von Bedienungsmöglichkeiten erschwert eine einfache und übersichtliche Handhabung und es besteht zwangsläufig die Gefahr von Fehlbedienungen. Auch die vorgesehene Libelle zur optischen Lagekontrolle schließt Fehlbedienungen grundsätzlich nicht aus.

Es besteht daher insbesondere die Aufgabe, einen Heber der eingangs erwähnten Art zu schaffen, der mit einem vergleichsweise geringen Personal- und Zeitaufwand bedient werden kann. Dabei soll insbesondere das Positionieren und Ausrichten seines Hubzylinders in eine vertikale Lage unterhalb des an der Flugzeugunterseite vorgesehenen Hebepunktes und auch das Anheben des Flugzeuges mit Hilfe dieses Hebers erleichtert werden.

Die erfindungsgemäße Lösung dieser Aufgabe besteht bei dem Heber der eingangs erwähnten Art insbesondere darin, daß der Neigungssensor elektrisch ist und mit der Neigungsanzeige verbunden ist und daß die Neigungsanzeige für wenigstens zwei der zwischen dem Hubzylinder und der zugeordneten Abstützung angeordneten Verbindungsachsen zumindest zwei optische Anzeigeelemente aufweist, von denen das eine Anzeigeelement ein zum vertikalen Ausrichten des Hubzylinders erforderliches Verlängern und das andere Anzeigeelement ein entsprechendes Verkürzen der der Verbindungsachse zugeordneten Abstützung anzeigt.

Die mit dem elektrischen Neigungssensor zusammenwirkende Neigungsanzeige vermag eine Abweichung des Hubzylinders aus einer vertikalen Lage im Vergleich zu einer Dosenlibelle wesentlich genauer zu erfassen. Für zumindest zwei der Verbindungsachsen weist die Neigungsanzeige des erfindungsgemäßen Hebers jeweils wenigstens zwei optische Anzeigeelemente auf, von denen das eine Anzeigeelement ein zum vertikalen Ausrichten des Hubzylinders erforderliches Verlängern und das andere Anzeigeelement ein entsprechendes Verkürzen der der Verbindungsachse zugeordneten Abstützung anzeigt. Durch diese achsenbezogene Anzeige kann dem Bedienpersonal auch mitgeteilt werden, welche der Standabstützungen zum Ausrichten des Hubzylinders noch verlängert oder verkürzt werden muß. Dies kommt einem exakten Ausrichten des Hubzylinders entgegen und vereinfacht den Positioniervorgang.

Als Neigungssensor kann beispielsweise ein zweiachsiger Lagegeber dienen, der die Lage einer im rechten Winkel zum Hubzylinder angeordneten Bezugsebene auswertet. Um jedoch auch handelsübliche Neigungssensoren verwenden zu können, ist es zweckmäßig, wenn der Heber zumindest zwei zueinander lageversetzte Neigungssensoren hat, die vorzugsweise jeweils einer längenveränderbaren Abstützung zugeordnet und gegebenenfalls auf die Verbindungsachsen zwischen dem Hubzylinder und der zugeordneten Abstützung ausgerichtet sind.

Durch die Ausrichtung dieser Neigungssensoren auf die Verbindungsachsen zwischen der zugeordneten Abstützung und dem Hubzylinder ist mit geringem Aufwand auch eine achsenbezogene Neigungsanzeige möglich, die dem Bedienpersonal mitteilt, inwieweit beispielsweise einzelne Hydraulikzylinder der Standabstützungen zum Ausrichten des Hubzylinders betätigt werden müssen.

Um dem Bedienpersonal besonders gut die zum Ausrichten des Hubzylinders notwendigen Längenveränderungen der einzelnen Standabstützungen sowie anschließend das Erreichen der Vertikallage anzuzeigen, ist es zweckmäßig, wenn die elektrische Neigungsanzeige Lampen- oder Leuchtdiodenketten aufweist, die jeweils einer der Standabstützungen zugeordnet sind und wenn eine vorzugsweise etwa in der Kettenmitte angeordnete Lampe oder Leuchtdiode die lagerichtige Anordnung der entsprechenden Verbindungsachse in Bezug auf eine vertikale Anordnung des Hubzylinders anzeigt.

Dabei wird dem Bedienpersonal eine Zuordnung der verschiedenen Lampen- oder Leuchtdiodenketten zu den einzelnen Standabstützungen und ihren Hydraulikzylindern noch erleichtert, wenn die Lampen- oder Leuchtdiodenketten der Neigungsanzeige zueinander entsprechend der Anordnung der Verbindungsachsen zum Hubzylinder angeordnet sind und wenn die optische Anzeige derart am Heber befestigt ist, daß die Ausrichtung ihrer Lampen- oder Leuchtdiodenketten der Ausrichtung der Verbindungsachsen zum Hubzylinder entspricht.

Sind also die Standabstützungen eines Dreibockhebers in Bezug auf dessen Hubzylinder im Winkel von 120° zueinander angeordnet, so sollten auch die Lampen- oder Leuchtdiodenketten im selben Winkel zueinander zu einer elektrischen Neigungsanzeige angeordnet und entsprechend der Ausrichtung der Verbindungsachsen am Heber befestigt sein.

Bei einer Weiterbildung gemäß der Erfindung, bei der der Heber Abstützungen aufweist, von denen zumindest zwei mittels jeweils eines Hydraulikzylinders längenveränderbar sind, ist vorgesehen, daß zum Betätigen zumindest der zwei Hydraulikzylinder wenigstens eine, vorzugsweise eine gemeinsame Hydraulikpumpe vorgesehen ist, und daß die Hydraulikzylinder insbesondere über Steuerventile getrennt voneinander ansteuerbar sind.

Während bei vorbekannten Hebern meist mehrere Personen erforderlich sind, die einerseits die Dosenlibelle beobachten und andererseits die Hydraulikzylinder der Standabstützungen betätigen, kann nunmehr eine Person die Hydraulikzylinder über eine Hydraulikpumpe betätigen, während sie gleichzeitig den Ausrichtungsvorgang des Hubzylinders auf der Neigungsanzeige beobachtet.
Zum Betätigen der Hydraulikzylinder kann zwar für jeden Zylinder eine eigene Hydraulikpumpe vorgesehen werden, jedoch wird der Herstellungsaufwand wesentlich verringert, wenn der Heber hierzu eine gemeinsame Hydraulikpumpe hat und die einzelnen Hydraulikzylinder über entsprechende Steuerventile, zum Beispiel über jeweils ein Einlaß- und ein Auslaßventil, getrennt voneinander ansteuerbar sind.

Nach einem Vorschlag gemäß der Erfindung, für den selbständig Schutz beansprucht wird, ist bei einem Heber, insbesondere Dreibockheber für Flugzeuge, mit einem Hubzylinder, der in einem Gestell starr gehalten ist, welches mindestens drei Standabstützungen hat wobei wenigstens zwei der Abstützungen zum vertikalen Ausrichtendes Hubzylindersmittels jeweils eines Hydraulikzylinders getrennt voneinander längenveränderbar sind, wobei die Hydraulikzylinder mit einer Steuereinrichtung sowie wenigstens einer Hydraulikpumpe verbunden sind, vorgesehen, daß zum automatischen, vertikalen Ausrichten des Hubzylinders an dem Heber wenigstens ein elektrischer Neigungssensor vorgesehen ist, der zur Bildung eines Steuer- und Regelkreises mit der Steuereinrichtung elektrisch verbunden ist, die an Steuerventile der Hydraulikzylinder angeschlossen ist.
Bei einem solchen Heber kann der Hubzylinder praktisch automatisch in seine vertikale Lage gebracht werden.
Das Beobachten einer Dosenlibelle oder dergleichen kann ebenso entfallen wie ein manuelles Betätigen der einzelnen Hydraulikzylinder.
Vielmehr werden die Hydraulikzylinder von der Steuereinrichtung angesteuert, die zum Ausrichten des Hubzylinders in seine vertikale Lage mit zumindest einem Neigungssensor in Steuerverbindung steht. Auch hier kann der Neigungssensor beispielsweise als zweiachsiger Lagegeber ausgebildet sein; ebenso gut können aber auch zumindest zwei handelsübliche Neigungssensoren eingesetzt werden.

Um den mit der Steuereinrichtung verbundenen Aufwand möglichst klein zu halten, ist es zweckmäßig, wenn der Heber als Dreibockheber mit drei Standabstützungen ausgebildet ist, von denen eine, beim Ausrichten des Hubzylinders als Fixpunkt oder Bezugsgröße dienende Abstützung von der Steuereinrichtung unabhängig ist und von denen die beiden anderen, mittels jeweils eines Hydraulikzylinderslängenveränderbaren Abstützungen mit der Steuereinrichtung in Steuerverbindung stehen. Die Steuereinrichtung steht hier also nur mit den Hydraulikzylindern von zwei der drei Abstützungen in Steuerverbindung und betätigt beim Ausrichten des Hubzylinders nur diese beiden Hydraulikzylinder in Bezug auf die dritte Standabstützung, die die Null-Lage festlegt.

Zweckmäßig ist es, wenn die Steuerventile als Proportionalventile ausgebildet sind, da solche Proportionalventile den Ausrichtungsvorgang beschleunigen und gleichzeitig eine genaue Positionierung des Hubzylinders ermöglichen.

Die Steuereinrichtung kann eine speicherprogrammierbare Steuereinrichtung sein, die sich auch nachträglich noch an die gestellten Anforderungen anpassen läßt. Demgegenüber kann die Steuereinrichtung besonders kostengünstig hergestellt und robust ausgestaltet werden, wenn sie eine Analog-Digital-Schaltung mit mehreren Ausgängen ist, wobei ein Ausgang zum Betätigen der Hydraulikpumpe und weitere Ausgänge zum Betätigen der Steuerventile vorgesehen sind. So kann eine solche Analog-Digital-Schaltung beispielsweise fünf Ausgänge aufweisen, von denen jeweils zwei Ausgänge einem der beiden, mit der Steuereinrichtung in Steuerverbindung stehenden Standabstützungen des Dreibockhebers zugeordnet sind, wobei der eine Ausgang der Schaltung das Einlaß- oder das Auslaßventil ansteuert und der andere Ausgang jeweils für den zum angesteuerten Proportionalventil fließenden Steuerstrom vorgesehen ist.

Eine besonders zweckmäßige Ausführungsform gemäß der Erfindung, bei der die Standabstützungen zum Verfahren des Hebers als Stützräder ausgebildet sind, sieht vor, daß der Heber als Selbstfahrheber mit einem Fahrantrieb sowie wenigstens einem lenkbaren Rad ausgebildet ist. Ein solcher Heber kann mit geringem Aufwand unter dem Hebepunkt an der Flugzeugunterseite positioniert werden, während bereits gleichzeitig der Hubzylinder mit Hilfe der Steuereinrichtung automatisch in eine vertikale Lage ausgerichtet wird.

Weitere Merkmale der Erfindung ergeben sich aus der folgenden Beschreibung eines erfindungsgemäßen Ausführungsbeispieles in Verbindung mit den Ansprüchen und der Zeichnung. Die einzelnen Merkmale könne je für sich oder zu mehreren bei einer Ausführungsform der Erfindung verwirklicht sein.

Es zeigt in zum Teil schematischer Darstellung:
- **Fig. 1**: einen Dreibockheber für Flugzeuge in einer Seitenansicht,
- **Fig. 2**: den Dreibockheber aus Fig. 1 in einer Draufsicht, wobei eines der Beine dieses Hebers nur teilweise dargestellt ist und
- **Fig. 3**: eine Aufsicht auf ein Flugzeug mit der prinzipiellen Anordnung einer Hebeeinrichtung, die drei der in den Figuren 1 und 2 dargestellten Heber aufweist.

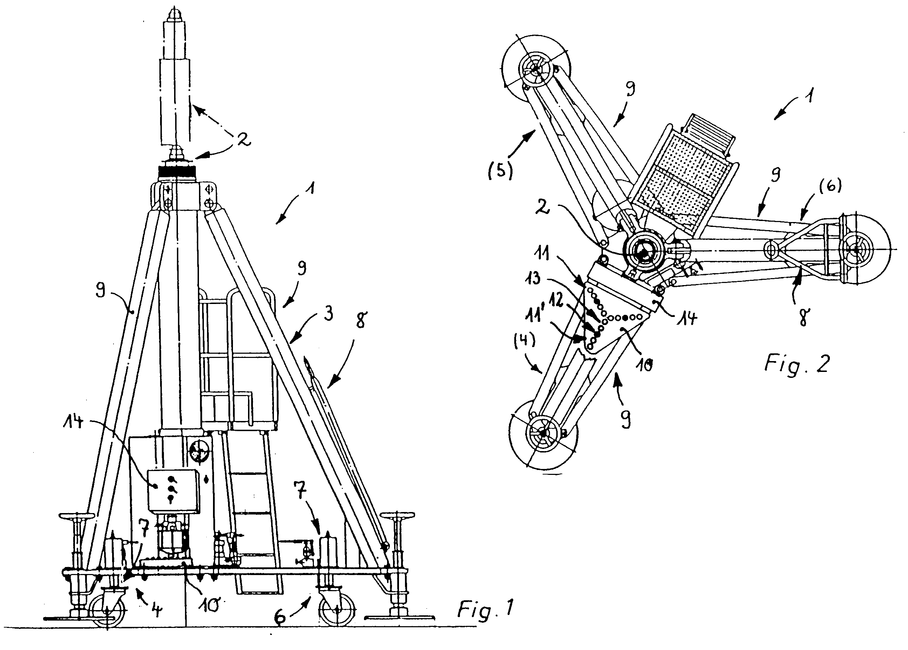

In Figur 1 und 2 ist ein Dreibockheber 1 für Flugzeuge mit einem Hubzylinder 2 dargestellt, der in einem Gestell 3 starr gehalten ist. Das Gestell 3 weist drei Standabstützungen 4, 5 und 6 auf, die mittels jeweils eines Hydraulikzylinders 7 getrennt voneinander längenveränderbar und hier als Pendel-Stützrollen ausgebildet sind. Der Heber 1 kann an einer vertikal verschwenkbaren Schleppöse 8 an einem Schleppfahrzeug befestigt und auf den Stützrädern unterhalb eines Hebepunktes an der Unterseite eines Flugzeuges positioniert werden. Durch Anheben des am Hebepunkt des Flugzeuges angreifenden Hubzylinders 2 kann dieses angehoben und bei Verwendung von beispielsweise drei derartigen Hebern 1 zu Wartungs- und Reparaturzwecken aufgebockt werden.

Um eine Beschädigung des Flugzeuges zu vermeiden, ist es notwendig, daß jeder der drei unterhalb eines vorgesehenen Hebepunktes positionierten Dreibockheber 1 so ausgerichtet wird, daß sein Hubzylinder 2 sich beim Anheben in einer praktisch lotrechten Vertikallage befindet.

Zur Erfassung von Abweichungen seines Hubzylinders 2 aus der Vertikallage weist der Heber 1 drei - hier nicht sichtbare - elektrische und voneinander lageversetzte Neigungssensoren auf, die jeweils einer längenveränderbaren Standabstützung 4, 5, 6 zugeordnet und auf die Verbindungsachse zwischen dieser Abstützung 4, 5 bzw. 6 und dem Hubzylinder 2 ausgerichtet sind. Bei dem hier dargestellten Dreibockheber 1 fluchten die Verbindungsachsen mit jeweils einem der drei Beine 9 des Hebers 1. Die Neigungssensoren sind mit einer Neigungsanzeige 10 elektrisch verbunden, die aus drei, jeweils einer Standabstützung 4, 5 bzw. 6 zugeordneten Leuchtdiodenketten 11 besteht. Während eine in der Kettenmitte angeordnete, beispielsweise grüne Leuchtdiode 12 die lagerichtige Anordnung der entsprechenden Verbindungsachse und ihrer Standabstützung 4, 5 bzw. 6 in Bezug auf eine vertikale Anordnung des Hubzylinders 2 anzeigt, zeigen die davon seitlich angeordneten, farblich vorzugsweise unterschiedlich - etwa rot - ausgestalteten Leuchtdioden 13 an, ob zum Ausrichten des Hubzylinders 2 ein Verlängern oder Verkürzen der zugeordneten Standabstützung 4, 5, 6 notwendig ist. Bei einer vergleichsweisen großen Abweichung leuchten die von der in der Kettenmitte angeordneten Leuchtdiode 12 weiter beabstandeten Leuchtdioden 13, während bei einer nur noch geringen Abweichung die unmittelbar benachbarte Leuchtdiode 13 geschaltet ist. Da die Leuchtdiodenketten 11 der optischen Neigungsanzeige 10 zueinander entsprechend der Anordnung der Verbindungsachsen am Hubzylinder angeordnet sind und die Neigungsanzeige 10 in einer den Verbindungsachsen entsprechenden Ausrichtung am Heber 1 befestigt ist, ist der Bedienperson eine leichte Zuordnung der einzelnen Ketten 11 zu den verschiedenen Standabstützungen 4, 5, 6 möglich; leuchten beispielsweise nur bei der Leuchtdiodenkette 11' eine der äußeren Leuchtdioden 13 auf, während bei den anderen beiden Ketten 11 die mittig angeordneten Leuchtdioden 12 brennen, so wird der Bedienperson von der Neigungsanzeige 10 ohne weiteres auch die Größenordnung mitgeteilt, um welche Länge die der Leuchtdiodenkette 11' zugeordnete Standabstützung 4 angehoben oder abgesenkt werden muß, um den Hubzylinder 2 in eine lotrechte Lage auszurichten.

Die Hydraulikzylinder 7 der Standabstützungen 4, 5, 6 sind auch manuell betätigbar. Um jedoch der Bedienperson den Ausrichtvorgang zu erleichtern, ist eine gemeinsame - hier nicht dargestellte - Hydraulikpumpe vorgesehen, die mit den Hydraulikzylindern 7 von zwei (4, 5) der drei Standabstützungen 4, 5, 6 verbunden ist. Dabei sind diese Hydraulikzylinder 7 über Steuerventile getrennt voneinander ansteuerbar, deren Betätigungsschalter in der Nähe der Neigungsanzeige 10 an dem Gehäuse einer Steuereinrichtung 14 vorgesehen sind. Über die Hydraulikpumpe und die Steuerventile läßt sich erforderlichenfalls der eine und/oder der andere Hydraulikzylinder betätigen und die entsprechende Standabstützung 4, 5 absenken oder anheben.

Das Ausrichten des Hubzylinders 2 in eine Vertikallage unterhalb des an der Flugzeugunterseite vorgesehenen Hebepunktes kann jedoch auch automatisch erfolgen. Dazu ist eine Steuereinrichtung 14 vorgesehen, die mit den Hydraulikzylindern 7 der Standabstützungen 4, 5, der Hydraulikpumpe sowie den beiden Neigungssensoren, die den Standabstützungen 4, 5 zugeordnet sind, einen Steuer- oder Regelkreis bildet.

Zum Ausrichten des Hubzylinders 2 werden die Standabstützungen 4, 5 in ihrer Länge von der Steuereinrichtung 14 an die Standabstützung 6 angepaßt, die von der Steuereinrichtung unabhängig ist und deren Hydraulikzylinder 7 nur manuell betätigt werden kann, der aber während des Ausrichtvorganges regelmäßig nicht betätigt wird, sondern als Bezugsgröße für die Steuereinrichtung 14 dient.

Um den Ausrichtvorgang des Hubzylinders 2 zu beschleunigen, ist es zweckmäßig, wenn die Steuerventile als Proportionalventile ausgebildet sind. Die Steuereinrichtung des hier dargestellten Dreibockhebers 1 ist eine speicherprogrammierbare Steuereinrichtung, die auch nachträglich noch an die gestellten Anforderungen angepaßt werden kann. Ebenso gut kann die Steuereinrichtung aber auch als Analog-Digital-Schaltung mit mehreren Ausgängen ausgebildet sein, wobei ein Ausgang zum Betätigen der Hydraulikpumpe und weitere Ausgänge zum Betätigen der Steuerventile vorzusehen sind. Eine solche Analog-Digital-Schaltung läßt sich besonders klein und kostengünstig herstellen.

Um den Dreibockheber 1 rasch positionieren und gleichzeitig dessen Hubzylinder 2 in eine vertikale Lage ausrichten zu können ist es zweckmäßig, wenn der Dreibockheber 1 als Selbstfahrheber mit einem Fahrantrieb sowie wenigstens einem lenkbaren Rad ausgebildet ist, wie er in der DE-PS 38 16 381 vorbeschrieben wurde.
Dabei kann der Heber 1 zumindest zur Betätigung der Lenkung und des Fahrantriebes eine mit den Arbeits- und Steueraggregaten vorzugsweise über Kabel verbundene Fernbedieneinrichtung aufweisen, so daß der Heber 1 auch insoweit mit geringem Aufwand von nur einer Bedienperson gesteuert werden kann.

Die Hydraulikpumpe und der Fahrantrieb können beispielsweise über eine Stromleitung oder aber eine mitgeführte Batterie betrieben werden.

Der hier dargestellte Dreibockheber 1 ermöglicht ein genaues Positionieren und Ausheben seines Hubzylinders 2 in eine vertikale Lage mit geringem Personal- und Zeitaufwand.

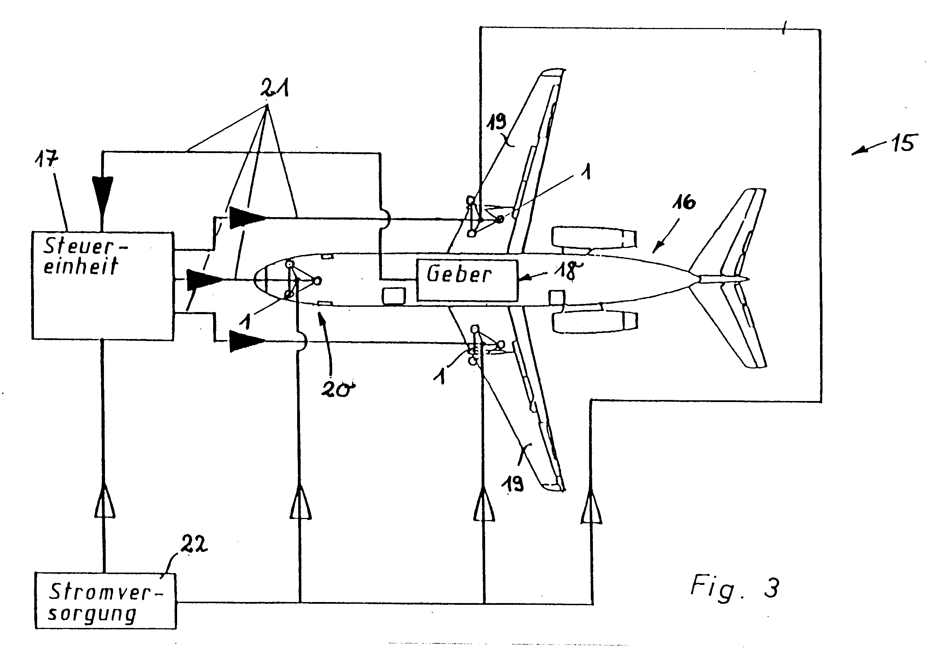

In Fig. 3 ist eine im ganzen mit 15 bezeichnete Hebeeinrichtung zum Hochbocken eines Flugzeuges 16 dargestellt, die drei der in den Figuren 1 und 2 gezeigten Heber 1 aufweist. Dabei sind zwei der Heber 1 unter den Tragflächen 19 und ein Heber 1 unter dem Bug 20 des Flugzeuges 16 angeordnet. Die Hebeeinrichtung 15 weist auch eine zentrale Steuereinrichtung auf, die in Figur 3 mit 17 bezeichnet ist. Ihre Stromversorgung ist in Fig. 3 mit 22 bezeichnet.

Zur Weiterleitung eines Freigabesignals für den Anhebevorgang nach dem vertikalen Ausrichten der Hubzylinder 2 stehen die Dreibockheber 1 mit der zentralen Steuereinrichtung 17 in Steuerverbindung, was in Fig. 3 durch die Verbindungslinien 21 angedeutet sein soll. Beispielsweise kann die Steuereinrichtung 14 der einzelnen Heber 1 dieses Freigabesignal an die zentrale Steuereinrichtung 17 der Hebeeinrichtung 15 absenden, wenn der entsprechende Hubzylinder 2 auf die erforderliche Vertikallage ausgerichtet wurde. Die zentrale Steuereinrichtung 17 löst den Anhebevorgang erst aus, wenn sie das Freigabesignal der mit ihr verbundenen Heber 1 erhalten hat. Ein Anhebevorgang unterbleibt, wenn auch nur einer der Heber 1 kein Freigabesignal an die zentrale Steuereinrichtung 17 weitergeleitet hat.

Das Anheben und Absenken des Flugzeuges 16 wird mittels der Hubzylinder 2 der Heber 1 bewerkstelligt. Der Hubzylinder 2 jedes Hebers 1 ist mit einem im Hubzylinder 2 geführten Hubkolben verbunden. Mit Hilfe einer Motorpumpe läßt sich der Hubzylinder axial anheben und absenken. Der vorzugsweise als Gewindespindel ausgebildete Hubzylinder 2 arbeitet mit einer Sicherheitsmutter zusammen, die je nach Hubstellung manuell oder automatisch nachgestellt wird und auf einem oberen Widerlager aufliegen kann. Auch bei einem Störungsfall und Versagen der Hydraulik wird somit der Hubzylinder 2 in der jeweils gerade eingenommenen Lage gehalten.

Die zentrale Steuereinrichtung hat einen am Flugzeug anbringbaren Lagegeber 18, der zur Einhaltung einer vorgebbaren Lage des Flugzeuges 16 während des Anhebens oder Absenkens mit den Hebern 1 in Steuerverbindung steht. Von diesem Lagegeber 18 aus werden entsprechend den Abweichungen der Flugzeuglager gegenüber den Sollwerten bezüglich der Längs- als auch der Querneigung des Flugzeuges 16, Steuerimpulse an die Heber 1 übermittelt, so daß auch während des Anhebens oder Absenkens eine vorgegebene Nivellierlage beibehalten bleibt. Dadurch wird der ohnehin vergleichsweise geringe Personal- und Zeitaufwand bei Bedienung der Dreibockheber 1 noch zusätzlich begünstigt und gleichzeitig auch die Sicherheit bei den Hubvorgängen erhöht.

Zweckmäßig ist es, wenn der Lagegeber 18 vorübergehend am Flugzeug 16, insbesondere eingriffsfrei an dessen Außenhaut anbringbar ist, wobei dazu ein Halter mit Saugnäpfen oder dergleichen vorgesehen sein kann. Das Anbringen des Lagegebers 18 ist somit praktisch an jedem Flugzeug ohne besondere Maßnahmen möglich.

Bevorzugt wird eine Ausführungsform, bei der der Lagegeber 18 zweiachsig zur Auswertung der Lage der durch die Flugzeug-Längsachse und die Flugzeug-Querachse bestimmten Ebene ausgebildet ist. Dadurch kann während des Anhebens und Absenkens des Flugzeuges 16 sowohl die Längsneigung als auch die Querneigung des Flugzeuges 16 überwacht und von der zentralen Steuereinrichtung 17 mittels der Dreibockheber 1 ausgeregelt werden.

Vorteilhaft ist es, wenn die zentrale Steuereinrichtung 17 eine Umschalteinrichtung für einen wahlweise manuellen und einen automatischen Betrieb in Verbindung mit dem Lagegeber 18 aufweist. In manueller Betriebsstellung können z.B. mittels eines Steuerknüppels die einzelnen Heber 1 angehoben oder abgesenkt werden. Im praktischen Betrieb werden die Heber 1 zunächst unter den Anhebepunkten am Flugzeug positioniert. Anschließend werden die Hubzylinder 2 der Heber 1 manuell mittels den Leuchtdiodenketten 11 der Neigungsanzeige 10 oder auch automatisch mittels der Steuereinrichtung 14 jedes Dreibockhebers 1 lotrecht ausgerichtet. Nach dem lotrechten Ausrichten der Hubzylinder 2 gibt die Steuereinrichtung 14 jedes Hubzylinders 2 ein Freigabesignal an die zentrale Steuereinrichtung 17 der Hebeeinrichtung 15. Nachdem die zentrale Steuereinrichtung 17 von jedem der Heber 1 ein Freigabesignal erhalten hat, beginnt diese mit dem Anhebevorgang. Dabei werden die Heber 1 über die zentrale Steuereinrichtung 17 und deren vorübergehend angebrachten Lagegeber 18 derart gesteuert, daS sich das Flugzeug 16 auch während des Anhebe- und des nachfolgenden Absenkvorganges in der gewünschten Nivellierlage befindet. Somit läßt sich zusammenfassend feststellen, daß das Ausrichten des Hubzylinders 2 jedes Hebers 1 mit geringem Personal- und Zeitaufwand, auch automatisch, erfolgen kann. Durch die Weiterleitung eines Freigabesignales, die auch durch eine drahtlose Verbindung über Funk vorgenommen werden kann, beginnt die Hebeeinrichtung 15 erst mit dem Anhebevorgang, wenn sich die Hubzylinder 2 jedes Hebers 1 in der erforderlichen Vertikallage befinden.

## Patentansprüche

1. Heber, insbesondere Dreibockheber (1) für Flugzeuge mit einem Hubzylinder (2), der in einem Gestell (3) starr gehalten ist, welches mindestens drei Standabstützungen (4,5,6) hat, wobei der Heber zur Erfassung von Abweichungen des Hubzylinders aus der Vertikallage zumindest einen Neigungssensor und eine Neigungsanzeige (10) aufweist und wobei wenigstens zwei der Abstützungen zum vertikalen Ausrichten des Hubzylinders (2) getrennt voneinander längenveränderbar sind, **dadurch gekennzeichnet**, daß der Neigungssensor elektrisch ist und mit der Neigungsanzeige (10) verbunden ist und daß die Neigungsanzeige (10) für wenigstens zwei der zwischen dem Hubzylinder (2) und der zugeordneten Abstützung (4, 5, 6) angeordneten Verbindungsachsen zumindest zwei optische Anzeigeelemente aufweist, von denen das eine Anzeigeelement ein zum vertikalen Ausrichten des Hubzylinders (2) erforderliches Verlängern und das andere Anzeigeelement ein entsprechendes Verkürzen der der Verbindungsachse zugeordneten Abstützung (4,5,6) anzeigt.

2. Heber nach Anspruch 1, dadurch gekennzeichnet, daß der Heber (1) zumindest zwei zueinander lageversetzte Neigungssensoren hat, die vorzugsweise jeweils einer längenveränderbaren Abstützung (4, 5, 6) zugeordnet und gegebenenfalls auf die Verbindungsachsen zwischen dem Hubzylinder (2) und der zugeordneten Abstützung (4, 5, 6) ausgerichtet sind.

3. Heber nach Anspruch 1 oder 2, dadurch gekennzeichnet, daß die elektrische Neigungsanzeige (10) Lampen- oder Leuchtdiodenketten (11) aufweist, die jeweils einer der Standabstützungen (4, 5, 6) zugeordnet sind und daß eine vorzugsweise in der Kettenmitte angeordnete Lampe oder Leuchtdiode (12) die lagerichtige Anordnung der entsprechenden Verbindungsachse in Bezug auf eine vertikale Anordnung des Hubzylinders (2) anzeigt.

4. Heber nach einem der Ansprüche 1 bis 3, dadurch gekennzeichnet, daß die Lampen- oder Leuchtdiodenketten (11) der Neigungsanzeige (10) zueinander entsprechend der Anordnung der Verbindungsachsen zum Hubzylinder (2) angeordnet sind und daß die Neigungsanzeige (10) derart am Heber (1) befestigt ist, daß die Ausrichtung ihrer Lampen- oder Leuchtdiodenketten (11) der Ausrichtung der Verbindungsachsen zum Hubzylinder (2) entspricht.

5. Heber nach einem der Ansprüche 1 bis 4 mit Abstützungen, von denen zumindest zwei mittels eines Hydraulikzylinders längenveränderbar sind, dadurch gekennzeichnet, daß zum Betätigen zumindest der zwei Hydraulikzylinder (7) wenigstens eine, vorzugsweise eine gemeinsame Hydraulikpumpe vorgesehen ist, und daß die Hydraulikzylinder (7) insbesondere über Steuerventile getrennt voneinander ansteuerbar sind.

6. Heber, insbesondere Dreibockheber für Flugzeuge, mit einem Hubzylinder, der in einem Gestell starr gehalten ist, welches mindestens drei Standabstützungen hat (4,5,6) wobei wenigstens zwei der Abstützungen zum vertikalen Ausrichten des Hubzylinders (2) mittels jeweils eines Hydraulikzylinders (7) getrennt voneinander längenveränderbar sind, wobei die Hydraulikzylinder mit einer Steuereinrichtung (14) sowie wenigstens einer Hydraulikpumpe verbunden sind, dadurch gekennzeichnet, daß zum automatischen, vertikalen Ausrichten des Hubzylinders (2) an dem Heber wenigstens ein elektrischer Neigungssensor vorgesehen ist, der zur Bildung eines Steuer- und Regelkreises mit der Steuereinrichtung (14) elektrisch verbunden ist, die an Steuerventile der Hydraulikzylinder angeschlossen ist.

7. Heber nach einem der Ansprüche 1 bis 6, dadurch gekennzeichnet, daß die Hydraulikzylinder (7) von zumindest zwei der längenveränderbaren Standabstützungen (4, 5) mit einer gemeinsamen Hydraulikpumpe verbunden sind und daß zum Betätigen dieser Hydraulikzylinder (7) Steuerventile vorgesehen sind, die mit der Steuereinrichtung (14) in Steuerverbindung stehen.

8. Heber nach einem der Ansprüche 1 bis 7, dadurch gekennzeichnet, daß der Heber (1) als Dreibockheber mit drei Standabstützungen (4, 5, 6) ausgebildet ist, von denen eine, zum Ausrichten des Hubzylinders (2) als Fixpunkt oder Bezugsgröße dienende Abstützung (6) von der Steuereinrichtung (14) unabhängig ist und von denen die beiden anderen, mittels jeweils eines Hydraulikzylinders (7) längenveränderbaren Abstützungen (4, 5) mit der Steuereinrichtung (14) in Steuerverbindung stehen.

9. Heber nach einem der Ansprüche 1 bis 8, dadurch gekennzeichnet, daß die Steuerventile als Proportionalventile ausgebildet sind.

10. Heber nach einem der Ansprüche 1 bis 9, dadurch gekennzeichnet, daß die Steuereinrichtung (14) eine speicherprogrammierbare Steuereinrichtung ist.

11. Heber nach einem der Ansprüche 1 bis 10, dadurch gekennzeichnet, daß die Steuereinrichtung eine Analog-Digital-Schaltung mit mehreren Ausgängen ist, wobei ein Ausgang zum Betätigen der Hydraulikpumpe und weitere Ausgänge zum Betätigen der Steuerventile vorgesehen sind.

12. Heber nach einem der Ansprüche 1 bis 11, mit Standabstützungen, die zum Verfahren des Hebers als Stützräder ausgebildet sind, dadurch gekennzeichnet, daß der Heber (1) als Selbstfahrheber mit einem Fahrantrieb sowie wenigstens einem lenkbaren Rad ausgebildet ist.

13. Heber nach einem der Ansprüche 1 bis 12, dadurch gekennzeichnet, daß der Heber (1) eine mit den Arbeits- und Steueraggregaten vorzugsweise über Kabel verbundene Fernbedieneinrichtung zumindest zur Betätigung der Lenkung und des Fahrantriebes aufweist.

14. Heber nach einem der Ansprüche 1 bis 13, dadurch gekennzeichnet, daß der Heber (1) zusammen mit zumindest zwei weiteren Hebern insbesondere unter den Tragflächen und dem Bug eines Flugzeuges (16) ansetzbar ist, daß die Heber (1) zur Weiterleitung eines Freigabesignales für den Anhebevorgang nach dem vertikalen Ausrichten ihrer Hubzylinder (2) mit einer zentralen Steuereinrichtung (17) in Steuerverbindung stehen und daß die zentrale Steuereinrichtung (17) einen am Flugzeug (16) anbringbaren Lagegeber (18) aufweist, der zur Einhaltung einer vorgebbaren Lage des Flugzeuges (16) während des Anhebens oder Absenkens mit den Hebern (1) in Steuerverbindung steht.

## Claims

1. A jack, particularly a three-legged jack (1) for aircraft, including a lifting cylinder (2) rigidly held in a mount (3) having at least three supports (4,5,6), wherein, to detect deviations of the lifting cylinder from the vertical position, the jack has at least one inclination sensor and an inclination display (10), and wherein at least two of the supports are variable in length independently of each other for vertically aligning the lifting cylinder (2), **characterized in that** the inclination sensor is electrical and is connected to the inclination display (10), and that the inclination display (10) has at least two visual display elements for at least two of the connecting axes disposed between the lifting cylinder (2) and the associated support (4,5,6), the one display element thereof indicating any lengthening required for vertically aligning the lifting cylinder (2) and the other display element indicating any corresponding shortening of the support (4,5,6) associated to the connecting axis.

2. A jack as claimed in claim 1, characterized in that the jack (1) has at least two inclination sensors in positionally staggered relationship which are preferably each associated to one support (4, 5, 6) variable in length and are optionally aligned to the connecting axes between the lifting cylinder (2) and the associated support (4, 5, 6).

3. A jack as claimed in claim 1 or claim 2, characterized in that the electric inclination display (10) has arrays (11) of lamps or light-emitting diodes each associated to one of the supports (4, 5, 6), and that a lamp or light-emitting diode (12) preferably arranged in the centre of the array displays the positionally accurate arrangement of the respective connecting axis in relation to a vertical arrangement of the lifting cylinder (2).

4. A jack as claimed in any one of claims 1 to 3, characterized in that the arrays (11) of lamps or light-emitting diodes of the inclination display (10) are arranged in a relationship to one another corresponding to the arrangement of the connecting axes in relation to the lifting cylinder (2), and that the visual display (10) is mounted on the jack (1) in such a way that the orientation of its arrays (11) of lamps or light-emitting diodes corresponds to the orientation of the connecting axes in relation to the lifting cylinder (2).

5. A jack as claimed in any one of claims 1 to 4, including supports of which at least two are variable in length by means of a hydraulic cylinder, characterized in that for operating at least the two hydraulic cylinders ( 7 ) provision is made for at least one hydraulic pump, preferably a common one, and that the hydraulic cylinders ( 7 ) are activable independently of one another particularly by way of control valves.

6. A jack, particularly a three-legged jack for aircraft, including a lifting cylinder rigidly held in a mount having at least three supports (4,5,6), wherein, for vertically aligning the lifting cylinder (2), at least two of the supports are variable in length independently of each other by means of one hydraulic cylinder (7) each, wherein the hydraulic cylinders are connected to a control unit (14) and at least one hydraulic pump, characterized in that the jack is provided with at least one electric inclination sensor which serves for automatically, vertically aligning the lifting cylinder (2) and to form a control circuit and control loop is electrically connected to the control unit (14) connected to control valves of the hydraulic cylinders.

7. A jack as claimed in any one of claims 1 to 6, characterized in that the hydraulic cylinders (7) of at least two of the supports (4, 5) variable in length are connected to a common hydraulic pump, and that for operating said hydraulic cylinders (7) control valves are provided which are connected for control to the control unit (14).

8. A jack as claimed in any one of claims 1 to 7, characterized in that the jack (1) takes the form of a three-legged jack with three supports (4, 5, 6), of which one support (6) is independent of the control unit (14) and serves as a bench mark or reference value for aligning the lifting cylinder (2), and of which the two other supports (4, 5) variable in length by means of one hydraulic cylinder (7) each are connected for control to the control unit (14).

9. A jack as claimed in any one of claims 1 to 8, characterized in that the control valves take the form of proportional valves.

10. A jack as claimed in any one of claims 1 to 9, characterized in that the control unit (14) is a programmable controller.

11. A jack as claimed in any one of claims 1 to 10, characterized in that the control unit is an analog-digital circuit with several outputs, whereby one output is provided for operating the hydraulic pump and further outputs for operating the control valves.

12. A jack as claimed in any one of claims 1 to 11, having supports in the form of jackwheels for moving the jack, characterized in that the jack (1) takes the form of a self-propelled jack with a travelling drive and at least one steerable wheel.

13. A jack as claimed in any one of claims 1 to 12, characterized in that the jack (1) has a remote control connected, preferably by cable, to the operating and control units, at least for operating the steering and travelling drive.

14. A jack as claimed in any one of claims 1 to 13, characterized in that the jack (1) is adapted to be applied together with at least two further jacks particularly under the wings and the nose of an aircraft (16), that the jacks (1) are connected for control to a central control unit (17) for transmitting a release signal for the jacking operation after their lifting cylinders (2) have been vertically aligned, and that the central control unit (17) has a position detector (18) which is attachable to the aircraft (16) and is connected for control to the jacks (1) so as to maintain a predeterminable position of the aircraft (16) during the raising or lowering.

## Revendications

1. Vérin de levage, en particulier vérin tripode (1) pour avions, avec un cylindre de levage (2) qui est maintenu rigidement dans un bâti (3) qui possède au moins trois supports au sol (4, 5, 6), le vérin de levage présentant, afin d'enregistrer des écarts du cylindre de levage par rapport à la position verticale, au moins un capteur d'inclinaison et un indicateur d'inclinaison (10), et au moins deux des supports étant réglables en longueur de façon indépendante afin d'orienter à la verticale le cylindre de levage (2), **caractérisé** en ce que le capteur d'inclinaison est électrique et est relié à l'indicateur d'inclinaison (10), et en ce que l'indicateur d'inclinaison (10) présente au moins deux éléments indicateurs optiques pour au moins deux axes de jonction situés entre le cylindre de levage (2) et le support associé (4, 5, 6), un de ces éléments indicateurs indiquant un allongement, nécessaire pour orienter à la verticale le cylindre de levage (2), et l'autre élément indicateur un raccourcissement correspondant du support (4, 5, 6) associé à l'axe de jonction.

2. Vérin de levage selon la revendication 1, **caractérisé** en ce que le vérin de levage (1) possède au moins deux capteurs d'inclinaison de positions mutuellement décalées, qui sont de préférence respectivement associés à un support (4, 5, 6) de longueur réglable et qui sont, le cas échéant, orientés sur les axes de jonction entre le cylindre de levage (2) et le support associé (4, 5, 6).

3. Vérin de levage selon la revendication 1 ou 2, **caractérisé** en ce que l'indicateur d'inclinaison électrique (10) présente des chaînes (11) de témoins lumineux ou de diodes électroluminescentes qui sont respectivement associées à un des supports au sol (4, 5, 6), et en ce qu'un témoin lumineux ou une diode électroluminescente (12), disposée de préférence au milieu de la chaîne, indique la disposition en position correcte de l'axe de jonction correspondant pour une disposition verticale du cylindre de levage (2).

4. Vérin de levage selon une des revendications 1 à 3, **caractérisé** en ce que les chaînes (11) de témoins lumineux ou de diodes électroluminescentes de l'indicateur d'inclinaison (10) sont disposées les unes par rapport aux autres en correspondance avec la disposition des axes de jonction par rapport au cylindre de levage (2), et en ce que l'indicateur d'inclinaison (10) est fixé sur le vérin de levage (1) de telle sorte que l'orientation de ses chaînes (11) de témoins lumineux ou de diodes électroluminescentes correspond à l'orientation des axes de jonction par rapport au cylindre de levage (2).

5. Vérin de levage selon une des revendications 1 à 4, avec des supports dont au moins deux sont réglables en longueur au moyen d'un cylindre hydraulique, **caractérisé** en ce qu'au moins une pompe hydraulique, de préférence une pompe hydraulique commune, est prévue pour actionner au moins les deux cylindres hydrauliques (7), et en ce que les cylindres hydrauliques (7) peuvent être asservis de façon indépendante, notamment par l'intermédiaire de distributeurs de commande.

6. Vérin de levage, en particulier vérin tripode pour avions, avec un cylindre de levage qui est maintenu rigidement dans un bâti qui possède au moins trois supports au sol (4, 5, 6), au moins deux des supports étant réglables en longueur de façon indépendante au moyen d'un cylindre hydraulique (7) respectif afin d'orienter à la verticale le cylindre de levage (2), les cylindres hydrauliques étant reliés à un dispositif de commande (14) ainsi qu'à au moins une pompe hydraulique, **caractérisé** en ce qu'au moins un capteur d'inclinaison électrique est prévu sur le vérin de levage afin d'orienter à la verticale de façon automatique le cylindre de levage (2), capteur qui, afin de former un circuit de commande et de réglage, est relié électriquement au dispositif de commande (14) qui est raccordé à des distributeurs de commande des cylindres hydrauliques.

7. Vérin de levage selon une des revendications 1 à 6, **caractérisé** en ce que les cylindres hydrauliques (7) d'au moins deux des supports au sol réglables en longueur (4, 5) sont reliés à une pompe hydraulique commune, et en ce que des distributeurs de commande, qui sont en liaison de commande avec le dispositif de commande (14), sont prévus pour actionner ces cylindres hydrauliques (7).

8. Vérin de levage selon une des revendications 1 à 7, **caractérisé** en ce que le vérin de levage (1) est réalisé sous forme de vérin tripode avec trois supports au sol (4, 5, 6), dont un support (6), servant de point fixe ou de grandeur de référence pour l'orientation du cylindre de levage (2), est indépendant du dispositif de commande (14), tandis que les deux autres supports (4, 5), réglables en longueur au moyen d'un cylindre hydraulique (7) respectif, sont en liaison de commande avec le dispositif de commande (14).

9. Vérin de levage selon une des revendications 1 à 8, **caractérisé** en ce que les distributeurs de commande sont réalisés sous la forme de distributeurs proportionnels.

10. Vérin de levage selon une des revendications 1 à 9, **caractérisé** en ce que le dispositif de commande (14) est un dispositif de commande à mémoire programmable.

11. Vérin de levage selon une des revendications 1 à 10, **caractérisé** en ce que le dispositif de commande est un montage analogique-numérique à plusieurs sorties, une sortie étant prévue pour l'actionnement de la pompe hydraulique et d'autres sorties pour l'actionnement des distributeurs de commande.

12. Vérin de levage selon une des revendications 1 à 11, avec des supports au sol qui, afin de déplacer le vérin de levage, sont réalisés sous la forme de roues de support, **caractérisé** en ce que le vérin de levage (1) est conçu comme vérin de levage automoteur avec un ensemble d'entraînement ainsi qu'au moins une roue directrice.

13. Vérin de levage selon une des revendications 1 à 12, **caractérisé** en ce que le vérin de levage (1) présente un dispositif de commande à distance qui est relié aux organes de travail et de commande par des câbles de préférence et qui est destiné à actionner au moins la direction et l'ensemble d'entraînement.

14. Vérin de levage selon une des revendications 1 à 13, **caractérisé** en ce que le vérin de levage (1) peut être mis en place, conjointement avec au moins deux autres vérins de levage, notamment sous les ailes et le nez d'un avion (16), en ce que les vérins de levage (1) sont en liaison de commande avec un dispositif central de commande (17) afin de transmettre un signal d'autorisation du processus de soulèvement à la suite de l'orientation à la verticale de leurs cylindres de levage (2), et en ce que le dispositif central de commande (17) présente un capteur de position (18), qui peut être installé sur l'avion (16) et qui est en liaison de commande avec les vérins de levage (1) en vue du respect d'une position prédéterminable de l'avion (16) pendant le soulèvement ou l'abaissement.
